# FASCICULE DE BREVET EUROPEEN

(11) **EP 1 320 569 B1**
(45) Date de publication et mention de la délivrance du brevet: **18.04.2007**
(21) Numéro de dépôt: 01965275.9
(22) Date de dépôt: 12.09.2001
(51) Int. Cl.: C08K 5/544, C08L 9/00, B60C 1/00

(54) **COMPOSITION DE CAOUTCHOUC POUR PNEUMATIQUE COMPORTANT UN CITRACONIMIDO-ALKOXYSILANE A TITRE D'AGENT DE COUPLAGE**
KAUTSCHUKZUSAMMENSETZUNG FÜR REIFEN DIE ALS KUPPLUNGSMITTEL EIN CITRACONIMIDOALKOXYSILAN ENTHÄLT
RUBBER COMPOSITION FOR TYRE COMPRISING A CITRACONIMIDO-ALKOXYSILANE AS COUPLING AGENT

(30) Priorité: 15.09.2000 FR 0011904
(43) Date de publication de la demande: 25.06.2003
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: BELIN, Laure, F-63200 Riom (FR); BLANCHARD, Christiane, F-63200 Riom (FR); PAGANO, Salvatore, F-63400 Chamalieres (FR); THONIER, Christel, F-63200 Mozac (FR)
(74) Mandataire: Ribière, Joel
(86) Numéro de dépôt international: PCT/EP2001/010511
(87) Numéro de publication internationale: WO 2002/022728

(56) Documents cités:
- EP-A- 0 816 420
- EP-A- 0 939 081
- EP-A- 0 982 311
- PATENT ABSTRACTS OF JAPAN vol. 013, no. 211 (C-597), 17 mai 1989 (1989-05-17) & JP 01 029385 A (BRIDGESTONE CORP), 31 janvier 1989 (1989-01-31) cité dans la demande

## Description

La présente invention se rapporte aux compositions de caoutchoucs diéniques renforcées d'une charge inorganique, destinées particulièrement à la fabrication de pneumatiques ou de produits semi-finis pour pneumatiques, en particulier aux bandes de roulement de ces pneumatiques.

On sait que d'une manière générale, pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans l'élastomère.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

Depuis que les économies de carburant et la nécessité de protéger l'environnement sont devenues une priorité, il s'est avéré cependant nécessaire de produire des pneumatiques ayant une résistance au roulement réduite, sans pénalisation de leur résistance à l'usure. Ceci a été rendu possible notamment grâce à la découverte de nouvelles compositions de caoutchouc renforcées de charges inorganiques spécifiques qualifiées de "renforçantes", capables de rivaliser avec le noir de carbone conventionnel du point de vue renforçant, et offrant en outre à ces compositions une faible hystérèse, synonyme d'une plus basse résistance au roulement pour les pneumatiques les comportant.

De telles compositions de caoutchouc, comportant des charges inorganiques renforçantes du type siliceuses ou alumineuses, ont par exemple été décrites dans les brevets ou demandes de brevet EP-A-0501227 (ou US-A-5227425), EP-A-0735088 (ou US-A-5852099), EP-A-0810258 (ou US-A-5900449), EP-A-0881252, WO99/02590, WO99/02601, WO99/02602, WO99/28376, WO00/05300, WO00/05301.

On citera en particulier les documents EP-A-0501227, EP-A-0735088 ou EP-A-0881252 qui divulguent des compositions de caoutchouc diénique renforcées de silices précipitées à haute dispersibilité, de telles compositions permettant de fabriquer des bandes de roulement ayant une résistance au roulement nettement améliorée, sans affecter les autres propriétés en particulier celles d'adhérence, d'endurance et de résistance à l'usure. De telles compositions présentant un tel compromis de propriétés contradictoires sont également décrites dans les demandes EP-A-0810258 et WO99/28376 avec, à titre de charges inorganiques renforçantes, des charges alumineuses (alumines ou oxyde-hydroxydes d'aluminium) spécifiques à dispersibilité élevée, ou encore dans les demandes WO00/73372 et WO00/73373 décrivant des oxydes de titane spécifiques du type renforçant.

L'utilisation de ces charges inorganiques spécifiques, hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique/élastomère), on entend de manière connue un agent apte à établir une connexion suffisante, de nature chimique et/ou physique, entre la charge inorganique et l'élastomère diénique ; un tel agent de couplage, au moins bifonctionnel, a par exemple comme formule générale simplifiée « Y-W-X », dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- W représente un groupe divalent permettant de relier Y et X.

Les agents de couplage ne doivent en particulier pas être confondus avec de simples agents de recouvrement de charge inorganique qui, de manière connue, peuvent comporter la fonction Y active vis-à-vis de la charge inorganique mais sont dépourvus de la fonction X active vis-à-vis de l'élastomère diénique.

Des agents de couplage, notamment (silice/élastomère diénique), ont été décrits dans un grand nombre de documents, les plus connus étant des alkoxysilanes bifonctionnels.

Ainsi il a été proposé dans la demande de brevet FR-A-2094859 d'utiliser un agent de couplage mercaptosilane pour la fabrication de bandes de roulement de pneumatiques. Il fut rapidement mis en évidence et il est aujourd'hui bien connu que les mercaptosilanes, et en particulier le γ-mercaptopropyltriméthoxysilane ou le γ-mercaptopropyltriéthoxysilane, sont susceptibles de procurer d'excellentes propriétés de couplage silice/élastomère, mais que l'utilisation industrielle de ces agents de couplage n'est pas possible en raison de la forte réactivité des fonctions -SH conduisant très rapidement au cours de la préparation de la composition de caoutchouc dans un mélangeur interne à des vulcanisations prématurées, appelées encore "grillage" ("scorching"), à des plasticités Mooney très élevées, en fin de compte à des compositions de caoutchouc quasiment impossibles à travailler et à mettre en oeuvre industriellement. Pour illustrer cette impossibilité d'utiliser industriellement de tels agents de couplage et les compositions de caoutchouc les contenant, on peut citer par exemple les documents FR-A-2206330, US-A-4002594.

Pour remédier à cet inconvénient, il a été proposé de remplacer ces mercaptosilanes par des alkoxysilanes polysulfurés, notamment des polysulfures de bis-alkoxyl(C₁-C₄)silylpropyle tels que décrits dans de nombreux brevets ou demandes de brevet (voir par exemple FR-A-2206330, US-A-3842111, US-A-3873489, US-A-3978103, US-A-3997581).

Ces alkoxysilanes polysulfurés sont généralement considérés aujourd'hui comme les produits apportant, pour des vulcanisats chargés à la silice, le meilleur compromis en terme de sécurité au grillage, de facilité de mise en oeuvre et de pouvoir renforçant. Parmi ces polysulfures, doit être cité en particulier le tétrasulfure de bis 3-triéthoxysilylpropyle (en abrégé TESPT), agent de couplage sans doute le plus utilisé aujourd'hui dans les compositions de caoutchouc pour pneumatiques à base d'une charge inorganique renforçante, même si ce composé est relativement onéreux et doit être utilisé le plus souvent dans une quantité relativement importante.

Or, de manière inattendue, la Demanderesse a découvert lors de ses recherches que certains alkoxysilanes spécifiques, porteurs d'une double liaison éthylénique activée particulière, peuvent offrir aux compositions de caoutchouc pour pneumatiques à base d'élastomère isoprénique (caoutchouc naturel, polyisoprènes de synthèse ou copolymères d'isoprène) un compromis de propriétés et des performances de couplage améliorés, comparés aux alkoxysilanes polysulfurés, notamment au TESPT. Ces alkoxysilanes spécifiques ne posent par ailleurs pas les problèmes précités de grillage prématuré et ceux de mise en oeuvre dus à une viscosité trop importante des compositions de caoutchouc à l'état cru, inconvénients propres notamment aux mercaptosilanes.

Des alkoxysilanes à double liaison éthylénique activée avaient certes déjà été décrits, notamment dans des compositions de caoutchouc pour pneumatiques (voir par exemple JP-A-64-029385, EP-A-0982311), mais ces agents de couplage avaient toujours montré jusqu'ici, soit une trop forte réactivité conduisant aux problèmes de grillage et d'augmentation de viscosité posés par les mercaptosilanes, soit des performances de couplage insuffisantes, en tout cas nettement inférieures à celles des alkoxysilanes polysulfurés du type TESPT.

En conséquence, un premier objet de l'invention concerne une composition élastomérique à base d'au moins un élastomère isoprénique, une charge inorganique à titre de charge renforçante et un agent de couplage (charge inorganique/élastomère isoprénique), cette composition étant caractérisée en ce que cet agent de couplage est un citraconimido-alkoxysilane.

L'invention a également pour objet ces pneumatiques et ces produits semi-finis eux-mêmes, lorsqu'ils comportent une composition élastomérique conforme à l'invention, ces pneumatiques pouvant être notamment destinés à des véhicules tourisme comme à des véhicules industriels choisis parmi camionnettes, "Poids-lourd" - i.e., métro, bus, engins de transport routier (camions, tracteurs, remorques), véhicules hors-la-route - , engins agricoles ou de génie civil, avions, autres véhicules de transport ou de manutention.

L'invention concerne en particulier les bandes de roulement de tels pneumatiques, en particulier des pneumatiques Poids-lourd, ces bandes de roulement pouvant être utilisées lors de la fabrication de pneumatiques neufs ou pour le rechapage de pneumatiques usagés ; grâce aux compositions de l'invention, ces bandes de roulement présentent à la fois une faible résistance au roulement, une très bonne adhérence ainsi qu'une résistance élevée à l'usure.

L'invention concerne également un procédé de préparation d'une composition conforme à l'invention, ce procédé étant caractérisé en ce qu'on incorpore à au moins un élastomère isoprénique, au moins une charge inorganique à titre de charge renforçante et un citraconimido-alkoxysilane, et en ce qu'on malaxe thermomécaniquement le tout, en une ou plusieurs étapes, jusqu'à atteindre une température maximale comprise entre 110°C et 190°C.

L'invention a d'autre part pour objet l'utilisation d'un tel citraconimido-alkoxysilane comme agent de couplage (charge inorganique/élastomère isoprénique), dans une composition de caoutchouc comportant un élastomère isoprénique et renforcée par une charge inorganique.

L'invention ainsi que ses avantages seront aisément compris à la lumière de la description et des exemples de réalisation qui suivent, ainsi que des figures relatives à ces exemples qui représentent des courbes de variation de module en fonction de l'allongement pour différentes compositions de caoutchouc diénique, conformes ou non à l'invention.

### I. MESURES ET TESTS UTILISES

Les compositions de caoutchouc sont caractérisées avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (MS 1+4) est exprimée en "unité Mooney" (UM, avec 1 UM=0,83 Newton.mètre).

### I-2. Temps de grillage

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux (ou contraintes apparentes, en MPa) à 10% d'allongement (noté M10), 100% d'allongement (noté M100) et 300% d'allongement (noté M300). On mesure également les contraintes à la rupture (en MPa) et les allongements à la rupture (en %). Toutes ces mesures de traction sont effectuées dans les conditions normales de température et d'hygrométrie selon la norme française NF T 40-101 (décembre 1979).

Un traitement des enregistrements de traction permet également de tracer la courbe de module en fonction de l'allongement (voir figures annexées), le module utilisé ici étant le module sécant vrai mesuré en première élongation, calculé en se ramenant à la section réelle de l'éprouvette et non à la section initiale comme précédemment pour les modules nominaux.

### I-4. Propriétés dynamiques

Les propriétés dynamiques ΔG* et tan(δ)ₘₐₓ sont mesurées sur un viscoanalyseur (Metravib VA4000), selon la norme ASTM D 5992 - 96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan (δ). Pour le cycle retour, on indique la valeur maximale de tan δ observée (tan(δ)ₘₐₓ), ainsi que l'écart de module complexe (ΔG*) entre les valeurs à 0.15 et 50% de déformation (effet Payne).

### II. CONDITIONS DE REALISATION DE L'INVENTION

Les compositions de caoutchouc selon l'invention sont à base d'au moins chacun des constituants suivants : (i) un (au moins un) élastomère isoprénique (composant A défini ci-après) ; (ii) une (au moins une) charge inorganique à titre de charge renforçante (composant B défini ci-après) ; et (üi) un (au moins un) citraconimido-alkoxysilane (composant C défini ci-après) en tant qu'agent de couplage (charge inorganique/élastomère isoprénique).

Bien entendu, par l'expression composition "à base de", il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication de la composition, en particulier au cours de sa vulcanisation.

### II-1. Elastomère diénique (composant A)

Par élastomère (ou caoutchouc) "diénique", on entend de manière générale un élastomère issu au moins en partie (i.e., un homopolymère ou un copolymère) de monomères diènes c'est-à-dire de monomères porteurs de deux doubles liaisons carbone-carbone, conjuguées ou non. Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant données, on entend dans la présente demande par "élastomère isoprénique", de manière connue, un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

Cet élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

En coupage avec l'élastomère isoprénique ci-dessus, les compositions de l'invention peuvent contenir des élastomères diéniques autres qu'isopréniques, à titre minoritaire (i.e., pour moins de 50% en poids) ou majoritaire (i.e., pour plus de 50% en poids), selon les applications visées. Elles pourraient également comporter des élastomères non diéniques, voire des polymères autres que des élastomères, par exemple des polymères thermoplastiques.

A titre de tels élastomères diéniques autres qu'isopréniques, on citera notamment tout élastomère diénique fortement insaturé choisi en particulier dans le groupe constitué par les polybutadiènes (BR) et les copolymères de butadiène, notamment les copolymères de styrène-butadiène (SBR), et les mélanges de ces différents élastomères.

Si de tels élastomères diéniques autres qu'isopréniques sont utilisés, l'homme du métier du pneumatique comprendra aisément que des agents de couplage autres que le citraconimido-alkoxysilane, en particulier des alkoxysilanes polysulfurés, pourront alors être avantageusement utilisés pour coupler ces élastomères diéniques complémentaires.

L'amélioration du couplage apportée par l'invention est particulièrement notable sur des compositions de caoutchouc dont la base élastomérique est constituée majoritairement (i.e., à plus de 50% en poids) de polyisoprène, i.e., de caoutchouc naturel ou de polyisoprène de synthèse.

La composition conforme à l'invention est particulièrement destinée à une bande de roulement pour pneumatique, qu'il s'agisse d'un pneumatique neuf ou usagé (cas du rechapage), en particulier à une bande de roulement de pneumatique Poids-lourd.

Dans un tel cas, le meilleur mode de réalisation connu de l'invention consiste à utiliser comme élastomère isoprénique uniquement du polyisoprène, plus préférentiellement du caoutchouc naturel. C'est pour de telles conditions que l'on a observé les meilleures performances en termes de résistance au roulement et à l'usure.

Mais l'homme du métier des pneumatiques comprendra que divers coupages entre élastomère isoprénique, notamment caoutchouc naturel, et d'autres élastomères diéniques, en particulier SBR et/ou BR, sont également possibles dans des compositions de caoutchouc conformes à l'invention utilisables par exemple pour diverses parties du pneumatique autres que sa bande de roulement, par exemple pour des flancs ou des protecteurs de pneumatiques pour véhicules de tourisme, camionnettes ou Poids-lourd, que ces coupages soient minoritaires ou majoritaires en élastomère isoprénique.

### II-2. Charge renforçante (composant B)

La charge blanche ou inorganique utilisée à titre de charge renforçante peut constituer la totalité ou une partie seulement de la charge renforçante totale, dans ce dernier cas associée par exemple à du noir de carbone.

De préférence, dans les compositions de caoutchouc conformes à l'invention, la charge inorganique renforçante constitue la majorité, i.e. plus de 50 % en poids de la charge renforçante totale, plus préférentiellement plus de 80 % en poids de cette charge renforçante totale.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est une charge minérale du type siliceuse, en particulier silice (SiO₂), ou du type alumineuse, en particulier alumine (Al₂O₃) ou oxyhydroxydes d'aluminium, ou un mélange de ces différentes charges.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HD") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines.

Comme exemples non limitatifs de telles silices hautement dispersibles préférentielles, on peut citer la silice Ultrasil 7000 de la société Degussa, les silices Zeosil 1165MP et 1115MP de la société Rhodia Chimie, la silice Hi-Sil 2000 de la société PPG, les silices Zeopol 8715 ou 8745 de la Société Huber, des silices précipitées traitées telles que par exemple les silices "dopées" à l'aluminium décrites dans la demande EP-A-0735088 précitée.

L'alumine renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm, telle que décrite dans la demande EP-A-0810258 précitée. Comme exemples non limitatifs de telles alumines renforçantes, on peut citer notamment les alumines "Baikalox" "A125", "CR125", "D65CR" (société Baïkowski), APA-100RDX (société Condéa), Aluminoxid C (société Degussa) ou AKP-G015 (Sumitomo Chemicals).

A titre d'autres exemples de charge inorganique renforçante susceptible d'être utilisée dans les compositions de caoutchouc de l'invention peuvent être encore cités les (oxyde-)hydroxydes d'aluminium ou les oxydes de titane spécifiques décrits dans les demandes WO99/28376, WO00/73372, WO00/73373.

L'état physique sous lequel se présente la charge inorganique renforçante est indifférent, que ce soit sous forme de poudre, de microperles, de granulés, de billes ou toute autre forme densifiée. Bien entendu on entend également par charge inorganique renforçante des mélanges de différentes charges inorganiques renforçantes, en particulier de charges siliceuses et/ou alumineuses hautement dispersibles telles que décrites ci-dessus.

Lorsque les compositions de caoutchouc de l'invention sont utilisées comme bandes de roulement de pneumatiques, la charge inorganique renforçante utilisée, en particulier s'il s'agit de silice, a de préférence une surface BET comprise entre 60 et 250 m²/g, plus préférentiellement comprise entre 80 et 200 m²/g.

La charge inorganique renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneus et particulièrement dans les bandes de roulement des pneus. A titre d'exemples non limitatifs de tels noirs, on peut citer les noirs N115, N134, N234, N339, N347, N375.

La quantité de noir de carbone présente dans la charge renforçante totale peut varier dans de larges limites, cette quantité de noir de carbone étant préférentiellement inférieure à la quantité de charge inorganique renforçante présente dans la composition de caoutchouc.

Dans les compositions conformes à l'invention, on préfère toutefois utiliser en association avec la charge inorganique renforçante un noir de carbone en faible proportion, à un taux préférentiel compris entre 2 et 20 pce, plus préférentiellement compris dans un domaine de 5 à 15 pce (parties en poids pour cent parties d'élastomère ou caoutchouc). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante, à savoir faible hystérèse (résistance au roulement diminuée) et adhérence élevée tant sur sol mouillé que sur sol enneigé ou verglacé.

De manière préférentielle, le taux de charge renforçante totale (charge inorganique renforçante plus noir de carbone, le cas échéant) est compris entre 10 et 200 pce, plus préférentiellement entre 20 et 150 pce (parties en poids pour cent parties d'élastomère), l'optimum étant différent selon les applications visées ; en effet, le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de pneumatiques aptes à rouler à grande vitesse, la quantité de charge inorganique renforçante, en particulier s'il s'agit de silice, est de préférence comprise entre 30 et 120 pce, plus préférentiellement comprise entre 30 et 100 pce.

On comprendra que lorsque le seul élastomère diénique présent dans la composition conforme à l'invention est un élastomère isoprénique, l'abréviation "pce" peut être alors remplacée par "pci" (parties en poids pour cent parties d'élastomère isoprénique).

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme française NF T 45-007 (novembre 1987) ; la surface spécifique CTAB est la surface externe déterminée selon la même norme NF T 45-007.

Enfin, l'homme du métier comprendra que, à titre de charge équivalente de la charge inorganique renforçante décrite dans le présent paragraphe, pourrait être utilisée une charge renforçante du type organique, notamment un noir de carbone pour pneumatique (voir par exemple WO99/28380), recouvert au moins en partie d'une couche inorganique nécessitant quant à elle, de manière connue, l'utilisation d'un agent de couplage pour assurer la liaison avec l'élastomère.

### II-3. Agent de couplage (composant C)

De manière connue, comme déjà expliqué précédemment, un agent de couplage (charge inorganique/élastomère diénique) est porteur d'au moins deux fonctions, notées ici "Y" et "X", lui permettant de pouvoir se greffer, d'une part sur la charge inorganique renforçante au moyen de la fonction Y, d'autre part sur l'élastomère diénique au moyen de la fonction X.

L'agent de couplage utilisé dans les compositions de caoutchouc de l'invention est un citraconimido-alkoxysilane. Il s'agit donc d'un organosilane au moins bifonctionnel comportant par molécule:
- (i) d'une part au moins un groupe alkoxyle (fonction "Y") sur son atome de silicium, lui permettant de se greffer sur la charge inorganique renforçante;
- (ii) d'autre part, et c'est là une caractéristique essentielle de l'invention, au moins un groupe citraconimide (fonction "X") lui permettant de se greffer sur l'élastomère isoprénique.

Un tel silane répond de manière connue à la formule générale (I) ci-dessous (Me = méthyle): 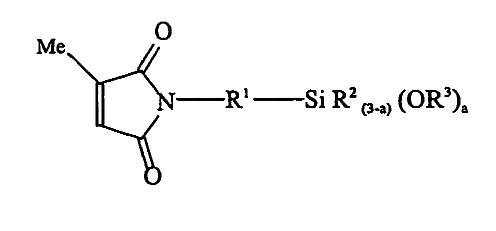 dans laquelle "a" est égal à 1, 2 ou 3, R¹ est un groupe divalent destiné à assurer la liaison avec l'atome de silicium, R² et R³ sont des groupes hydrocarbonés monovalents.

On voit dans cette formule (I) que la fonction X de cet agent de couplage est la fonction citraconimide fixée sur l'atome de silicium par l'intermédiaire du radical R¹, caractérisée notamment par la présence d'une double liaison éthylénique (C=C) activée par un groupe carbonyle (C=O) adjacent. La fonction Y est une fonction alkoxysilyle, représentée par un à trois groupe(s) alkoxyle(s) (OR³) fixé(s) sur l'atome de silicium.

Le radical R¹, substitué ou non substitué, est de préférence un radical hydrocarboné, saturé ou non saturé, comportant de 1 à 18 atomes de carbone, ledit radical R¹ pouvant être interrompu au sein de la chaîne hydrocarbonée par au moins un hétéroatome tel que O, S ou N. Conviennent notamment des groupements alkylène en C₁-C₁₈ ou des groupements arylène en C₆-C₁₂, plus particulièrement des alkylènes en C₁-C₁₀, notamment en C₂-C₄, en particulier le propylène.

R² et R³, identiques ou différents, linéaires ou ramifiés, comportent de préférence de 1 à 15 atomes de carbone. Ces radicaux R² et R³ comportant de 1 à 15 atomes de carbone sont plus préférentiellement choisis parmi les alkyles, cycloalkyles ou aryles, en particulier parmi les alkyles en C₁-C₆, les cycloalkyles en C₅-C₈ et le radical phényle. Plus préférentiellement encore, R² et R³ sont des alkyles en C₁-C₃, en particulier choisis parmi méthyle ou éthyle.

En d'autres termes, l'invention est plus préférentiellement mise en oeuvre avec un citraconimido-alkyl(C₁-C₃)-alkoxy(C₁-C₃)silane, en particulier un citraconimido-propyl-alkoxy(C₁-C₃)silane dans lequel le ou les groupes alkoxyles sont en particulier choisis parmi méthoxyle ou éthoxyle, plus particulièrement l'éthoxyle.

De tels composés sont connus (voir par exemple EP-A-0982311) et peuvent être préparés, selon une voie de synthèse préférée, par réaction d'un aminoalkylalkoxysilane sur l'anhydride citraconique en présence d'un solvant organique anhydre (par exemple toluène), d'un catalyseur du type acide de Lewis (par exemple ZnCl₂) et d'un agent de cyclisation tel que l'hexaméthyldisilazane (HMDS).

Les citraconimido-alkoxysilanes précédemment décrits se sont révélés suffisamment efficaces à eux seuls pour le couplage d'un élastomère isoprénique et d'une charge inorganique renforçante telle que la silice. Sans que ceci soit limitatif, ils peuvent avantageusement constituer le seul agent de couplage présent dans les compositions de caoutchouc de l'invention, en particulier lorsque l'élastomère diénique consiste exclusivement en un élastomère isoprénique, notamment caoutchouc naturel ou polyisoprène cis-1,4 de synthèse.

La teneur en composant (C) est de préférence supérieure à 0,5 pci, plus préférentiellement comprise entre 1 et 15 pci. En dessous des minima indiqués l'effet risque d'être insuffisant, alors qu'au delà du maximum préconisé on n'observe généralement plus d'amélioration du couplage, alors que les coûts de la composition augmentent. Pour ces différentes raisons, la teneur en composant C est plus préférentiellement comprise entre 2 et 10 pci.

L'homme du métier saura ajuster cette teneur en composant C en fonction de l'application visée, notamment de la partie du pneumatique à laquelle est destinée la composition de caoutchouc de l'invention, de la nature de l'élastomère isoprénique et de la quantité de charge inorganique renforçante utilisée. Bien entendu, afin de réduire les coûts des compositions de caoutchouc, il est souhaitable d'en utiliser le moins possible, c'est-à-dire le juste nécessaire pour un couplage suffisant entre l'élastomère isoprénique et la charge inorganique renforçante. Son efficacité permet, dans un grand nombre de cas, d'utiliser le citraconimido-alkoxysilane à un taux préférentiel représentant entre 0,5% et 20% en poids par rapport à la quantité de charge inorganique renforçante ; des taux inférieurs à 15%, notamment inférieurs à 10% sont plus particulièrement préférés.

Les citraconimido-alkoxysilanes précédemment décrits pourraient être préalablement greffés sur les charges inorganiques renforçantes, notamment sur de la silice, par l'intermédiaire de leur(s) fonction(s) alkoxyle(s), les charges inorganiques renforçantes ainsi "précouplées" pouvant ensuite être liées à l'élastomère isoprénique par l'intermédiaire de leur fonction libre citraconimide.

### II-4. Additifs divers

Bien entendu, les compositions de caoutchouc conformes à l'invention comportent également tout ou partie des additifs habituellement utilisés dans les compositions de caoutchouc comportant un élastomère isoprénique et destinées à la fabrication de pneumatiques ou de bandes de roulement de pneumatiques, comme par exemple des plastifiants, des agents de protection tels que cires anti-ozone, anti-ozonants chimiques, anti-oxydants, agents anti-fatigue, des promoteurs d'adhésion, un système de réticulation tel que ceux à base soit de soufre, soit de donneurs de soufre et/ou de peroxyde et/ou de bismaléimides, des accélérateurs de vulcanisation, des activateurs de vulcanisation, etc. A la charge inorganique renforçante peut être également associée, si besoin est, une charge inorganique conventionnelle peu ou non renforçante, par exemple des particules d'argiles, de bentonite, talc, craie, kaolin, oxydes de titane conventionnels (non renforçants).

Les compositions de caoutchouc conformes à l'invention peuvent également contenir, en complément des citraconimido-alkoxysilanes (composant C) précédemment décrits, des agents de recouvrement de la charge inorganique renforçante, comportant par exemple la seule fonction Y, ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des alkylalkoxysilanes, notamment des alkyltriéthoxysilanes, comme par exemple le 1-octyl-triéthoxysilane commercialisé par la société Hüls sous la dénomination Dynasylan Octeo ou le 1-hexa-décyl-triéthoxysilane commercialisé par la société Degussa sous la dénomination Si216, des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des α,ω-dihydroxy-polyorganosiloxanes (notamment des α,ω-dihydroxy-polydiméthylsiloxanes).

Comme indiqué précédemment, les compositions conformes à l'invention peuvent aussi contenir d'autres agents de couplage que le composant C, par exemple des alkoxysilanes polysulfurés, lorsque ces compositions contiennent, outre l'élastomère isoprénique, d'autres élastomères diéniques, par exemple du type SBR et/ou BR, dont le couplage avec la charge inorganique renforçante peut alors être avantageusement assuré par des agents de couplage conventionnels tels que des alkoxysilanes polysulfurés.

### II-5. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tₘₐₓ) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de réticulation ou vulcanisation ; de telles phases ont été décrites par exemple dans les demandes EP-A-0501227, EP-A-0735088, EP-A-0810258, EP-A-0881252, WO99/28376, WO00/05300 ou WO00/05301 précitées.

Le procédé de fabrication selon l'invention est caractérisé en ce qu'au moins le composant B et le composant C sont incorporés par malaxage au composant A au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, tous les constituants de base nécessaires, les éventuels agents de recouvrement ou de mise en oeuvre complémentaires et autres additifs divers, à l'exception du système de vulcanisation. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille, d'une plaque ou encore extrudée, par exemple pour former un profilé de caoutchouc utilisé pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Le système de vulcanisation proprement dit est préférentiellement à base de soufre et d'un accélérateur primaire de vulcanisation, en particulier d'un accélérateur du type sulfénamide. A ce système de vulcanisation de base viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Bien entendu, les compositions conformes à l'invention peuvent être utilisées seules ou en coupage (i.e., en mélange) avec toute autre composition de caoutchouc utilisable pour la fabrication de pneumatiques.

### III. EXEMPLES DE REALISATION DE L'INVENTION

### III-1. Synthèse de l'agent de couplage

Pour les besoins de ces essais, on prépare le N-(propyltriéthoxysilyl)citraconimide par réaction de l'anhydride citraconique sur le 3-aminopropyltriéthoxysilane, en s'inspirant d'un procédé de synthèse de dérivés N-alkyl- et N-arylimides tel que décrit dans *J. Org. Chem.,* Vol. 62 No. 8, 2652-2654, 1997.

Le schéma de synthèse est le suivant :

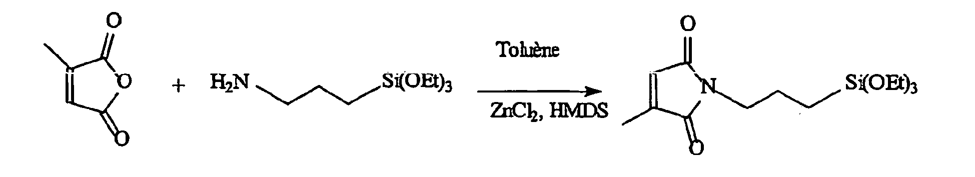

Plus précisément, on opère de la manière suivante : dans un tricol de 500 ml, muni d'un barreau aimanté et surmonté d'un réfrigérant, on introduit d'abord l'anhydride citraconique (69,9 mmol, soit 6,4 ml ou 7,8 g) dilué dans 200 ml de toluène ; le 3-aminopropyltriéthoxysilane (69,9 mmol, soit 16,4 ml ou 15,4 g), dilué dans 120 ml de toluène, est additionné à la solution précédente, goutte à goutte, à l'aide d'une ampoule de coulée.

Après 5 heures d'agitation à la température ambiante, on observe par CPG (chromatographie en phase gazeuse) la disparition totale de l'aminopropyltriéthoxysilane, tandis que l'acide N-[propyltriéthoxysilyl]citraconamique formé est caractérisé par chromatographie liquide haute performance (CLHP).

On additionne alors au milieu réactionnel, en une seule fois, 9,5 g de ZnCl₂ (ceux-ci restent en suspension), et, une fois le bain-marie porté à 80°C, 1,5 équivalents (104,5 mmol, soit 22,6 ml ou 16,9 g) d'hexaméthyldisilazane (HMDS) dilué dans 120 ml de toluène, par l'intermédiaire d'une ampoule de coulée, pendant environ 30 minutes.

Après deux heures de chauffage, on constate l'apparition d'un nouveau pic en CLHP ainsi qu'en CPG et la disparition de l'acide N-[propyltriéthoxysilyl]citraconamique. Le chauffage est alors arrêté tandis que l'agitation est poursuivie toute la nuit. Le milieu réactionnel est filtré sur verre fritté et le filtrat obtenu est volatilisé ; une filtration sur microfiltre permet d'éliminer le ZnCl₂ résiduel et les traces de HMDS sont éliminées par distillation dans un four à boules.

On obtient ainsi 19,6 g d'un liquide visqueux orange dont l'analyse par RMN du proton et du silicium révèle qu'il répond à la formule qui suit (rendement de la réaction : 90%):

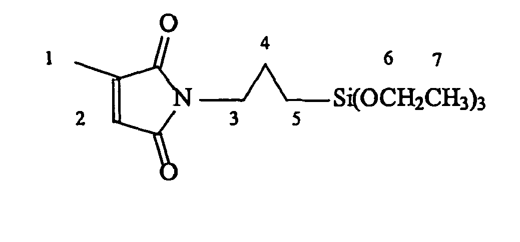

Pour les besoins d'essais comparatifs, on prépare d'autre part le N-(propyltriéthoxysilyl)-maléimide en procédant de la même manière (aux différences de masses molaires près) que ci-dessus, mais en remplaçant l'anhydride citraconique par l'anhydride maléique.

### III-2. Préparation des compositions de caoutchouc

On procède pour les essais qui suivent de la manière suivante: on introduit dans un mélangeur interne, rempli à 70% et dont la température initiale de cuve est d'environ 60°C, l'élastomère isoprénique (ou le mélange d'élastomères diéniques, le cas échéant), la charge renforçante, l'agent de couplage, puis les divers autres ingrédients à l'exception du système de vulcanisation. On conduit alors un travail thermomécanique (phase non-productive) en une ou deux étapes (durée totale du malaxage égale à environ 7 min), jusqu'à atteindre une température maximale de "tombée" d'environ 165°C. On récupère le mélange ainsi obtenu, on le refroidit puis on ajoute soufre et sulfénamide sur un mélangeur externe (homo-finisseur) à 30°C, en mélangeant le tout (phase productive) pendant 3 à 4 minutes.

Les compositions ainsi obtenues sont ensuite calandrées sous la forme de plaques (épaisseur de 2 à 3 mm) ou de feuilles fines de caoutchouc pour la mesure de leurs propriétés physiques ou mécaniques, ou extrudées pour former des profilés utilisables directement, après découpage et/ou assemblage aux dimensions souhaitées, par exemple comme produits semi-finis pour pneumatiques, en particulier comme bandes de roulement pour pneumatiques Poids-lourd.

Dans les essais qui suivent, l'élastomère isoprénique est un caoutchouc naturel et la charge inorganique renforçante est utilisée, dans les compositions conformes à l'invention, à un taux préférentiel compris entre 30 et 100 pce. D'autre part, toutes les compositions testées comportent (non reporté dans les tableaux de résultats) une faible proportion de noir de carbone N330 (environ 5 à 6 pce) utilisé en tant qu'agent de pigmentation noire et anti-UV.

### III-3. Essais de caractérisation

### A) Essai 1

Cet essai a pour but de démontrer les performances de couplage (charge inorganique/élastomère isoprénique) améliorées dans une composition conforme à l'invention, comparée:
- d'une part à une composition de référence de l'art antérieur, utilisant l'agent de couplage conventionnel alkoxysilane polysulfuré (TESPT);
- d'autre part à une autre composition témoin utilisant comme agent de couplage un alkoxysilane comportant lui aussi une double liaison éthylénique activée par un groupe carbonyle adjacent, à savoir le méthacrylate de triméthoxy-silylpropyle (en abrégé TMSPM).

On rappelle que le TEPST est le tétrasulfure de bis(3-triéthoxysilylpropyl), de formule [(C₂H₅O)₃Si(CH₂)₃S₂]₂; il est commercialisé par exemple par la société Degussa sous la dénomination "Si69" (ou "X50S" lorsqu'il est supporté à 50% en poids sur du noir de carbone), ou encore par la société Witco sous la dénomination "Silquest A1289" (dans les deux cas, mélange commercial de polysulfures Sₙ avec une valeur moyenne pour n qui est proche de 4).

Quant au TMSPM, il est commercialisé par exemple par la société Hüls sous la dénomination "Dynasylan Memo", et répond à la formule connue (voir par exemple documents DE-A-4319142 ou US-A-5484848) :

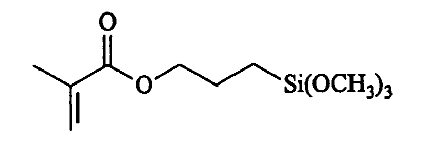

On prépare donc pour cela trois compositions de caoutchouc à base de caoutchouc naturel et renforcées de silice, notées C-1 à C-3, ces compositions étant destinées à des bandes de roulement pour pneumatiques Poids-lourd.

Ces trois compositions sont identiques, exception faite de l'agent de couplage utilisé:
- composition C-1 : TESPT;
- composition C-2 : citraconimido-alkoxysilane synthétisé ci-dessus (§ III-1);
- composition C-3 : TMSPM.

Les trois organosilanes testés sont utilisés à un taux isomolaire en silicium, c'est-à-dire qu'on utilise, quelle que soit la composition testée, le même nombre de moles de fonctions alkoxysilyles réactives vis-à-vis de la silice et de ses groupes hydroxyles de surface. Par rapport au poids de polyisoprène, le taux de silane est dans les trois cas inférieur à 5 pci, cette quantité représentant moins de 10% en poids par rapport à la quantité de charge inorganique renforçante.

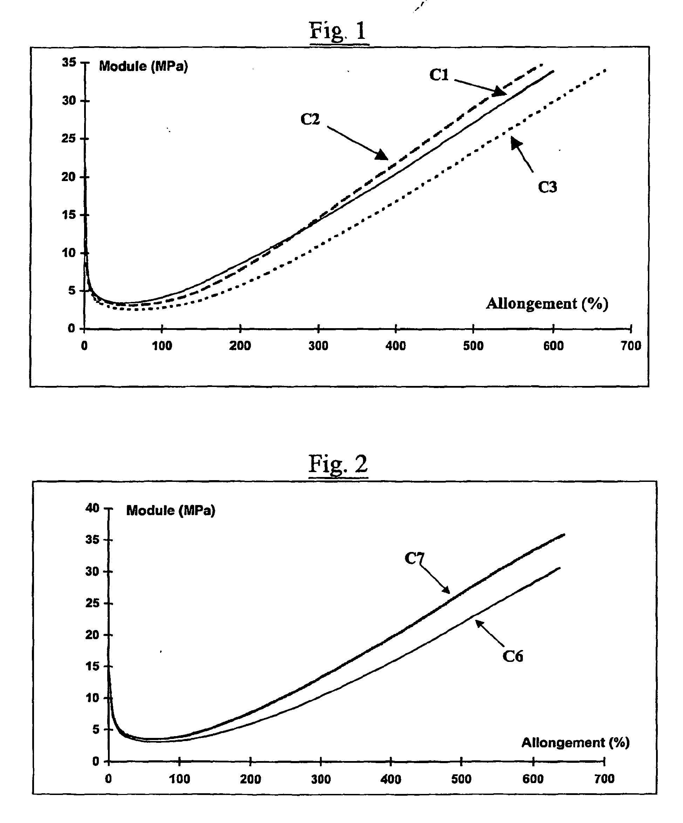

Les tableaux 1 et 2 donnent la formulation des différentes compositions (tableau 1 - taux des différents produits exprimés en pce ou pci), leurs propriétés avant et après cuisson (environ 30 min à 150°C) ; le système de vulcanisation est constitué par soufre et sulfénamide. La figure 1 annexée reproduit les courbes de module (en MPa) en fonction de l'allongement (en %) ; ces courbes sont notées C1 à C3 et correspondent respectivement aux compositions C-1 à C-3.

L'examen de ces différents résultats du tableau 2 et de la figure 1 conduit aux observations suivantes:
- les temps de grillage (T5) sont suffisamment longs dans tous les cas (plus de 20 minutes), offrant une marge de sécurité importante vis-à-vis du problème de grillage;
- les valeurs de plasticité Mooney restent basses (au plus égales à 30 UM) quelle que soit la composition considérée, ce qui est l'indicateur d'une très bonne aptitude des compositions à la mise en oeuvre à l'état cru;
- après cuisson, la composition conforme à l'invention (C-2) présente les valeurs les plus élevées de module sous forte déformation (M300), ainsi que le rapport (M300/M100) le plus élevé, indicateurs connus pour l'homme du métier de la qualité du renforcement apporté par la charge inorganique;
- comparativement à la composition de référence C-1, les propriétés d'hystérèse sont sensiblement améliorées pour la composition C-2, comme illustré par une valeur ΔG* plus faible, synonyme d'une résistance au roulement réduite;
- enfin, comparée à la composition témoin C-3, la composition C-2 montre un meilleur compromis de propriétés en termes de renforcement et d'hystérèse.

Ce comportement globalement amélioré de la composition C-2 conforme à l'invention illustre une haute qualité de la liaison ou couplage entre la charge inorganique renforçante et l'élastomère isoprénique.

La figure 1 confirme bien les observations précédentes : la composition de l'invention (C-2) révèle un niveau de renforcement supérieur pour les plus grands allongements (300% et plus), comparée à la composition de référence C-1, et en tout cas un renforcement nettement meilleur, quel que soit l'allongement considéré, comparée à la composition de référence C-3.

### B) Essai 2

Cet essai démontre que les compositions conformes à l'invention, comportant à titre d'agent de couplage un citraconimido-alkoxysilane, présentent un compromis de propriétés amélioré par rapport à des compositions connues utilisant comme agent de couplage un autre alkoxysilane comportant lui aussi une double liaison éthylénique activée par un groupe carbonyle adjacent, à savoir un maléimido-alkoxysilane.

On prépare pour cet essai deux compositions de caoutchouc à base de caoutchouc naturel et renforcées de silice, destinées à des bandes de roulement pour pneumatiques Poids-lourd. Ces deux compositions ont une formulation identique, exception faite de l'agent de couplage utilisé:
- composition C-4 : citraconimido-triéthoxysilane (4,7 pce);
- composition C-5 : maléimido-triéthoxysilane (4,5 pce).

On rappelle ici que le maléimido-triéthoxysilane a pour formule connue (voir notamment demandes JP64-029385 et EP 0 982 311 précitées):

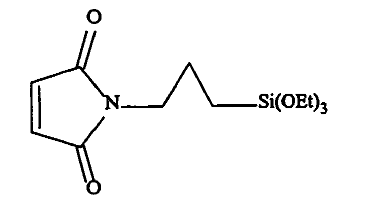

Par rapport à la formule ci-dessus, le citraconimido-triéthoxysilane, de formule: 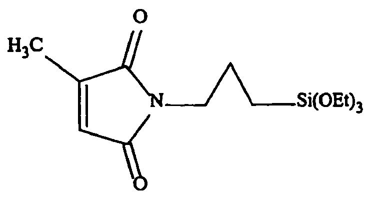 ne se distingue donc que par la présence, sur la double liaison éthylénique, d'un groupe méthyle (CH₃) en lieu et place d'un atome d'hydrogène.

Les tableaux 3 et 4 donnent la formulation des deux compositions, leurs propriétés avant et après cuisson (35 min, 150°C). La composition C-4 est identique à la composition C-2 précédemment testée. Les deux agents de couplage sont utilisés à un taux isomolaire en fonctions triéthoxysilane. Par rapport au poids de polyisoprène, le taux d'agent de couplage est dans les deux cas inférieur à 5 pci, soit moins de 10% en poids par rapport à la quantité de charge inorganique renforçante.

Les différents résultats du tableau 4 démontrent que la composition C-4 présente, comparée au témoin C-5, un compromis de propriétés amélioré avec:
- certes des performances de couplage sensiblement équivalentes, comme illustré par des valeurs voisines de modules M100, M300, de rapport M300/M100 et de contrainte à la rupture;
- mais surtout, de manière inattendue, une viscosité Mooney très nettement réduite (diminution de 42 UM).

En d'autres termes, le citraconimido-alkoxysilane procure une excellente qualité de liaison entre l'élastomère isoprénique et la charge inorganique, comme déjà démontré dans l'essai 1 précédent, tout en offrant, malgré une structure chimique très voisine, une mise en oeuvre à l'état cru qui est très fortement améliorée par rapport au maléimido-alkoxysilane.

### C) Essai 3

Cet essai illustre l'effet bénéfique de l'invention dans une composition à base de caoutchouc naturel comportant un autre type de charge inorganique renforçante, en l'occurrence une alumine hautement dispersible telle que décrite dans la demande EP-A-0810258 précitée.

Les deux compositions testées sont identiques aux différences près qui suivent:
- composition C-6 : agent de couplage TESPT (4 pce);
- composition C-7 : citraconimido-alkoxysilane (4,7 pce).

La composition C-6 est le témoin de l'essai, la composition C-7 est celle conforme à l'invention. Les tableaux 5 et 6 donnent la formulation des deux compositions, leurs propriétés avant et après cuisson. La figure 2 annexée reproduit les courbes de module (en MPa) en fonction de l'allongement (en %), ces courbes étant notées C6 et C7 et correspondant respectivement aux compositions C-6 et C-7.

Les résultats du tableau 6 démontrent une nouvelle fois, dans la matrice isoprénique, la supériorité globale du citraconimido-alkoxysilane par rapport à l'agent de couplage conventionnel TESPT, avec notamment:
- une viscosité à l'état cru, une sécurité au grillage (T5) et des propriétés à la rupture équivalentes, combinées à
- des valeurs de modules M100, M300 et un rapport (M300/M100) plus élevés, ce qui illustre clairement un couplage amélioré, comme confirmé par les courbes C6 et C7 de la figure 2 (courbe C7 située nettement au-dessus de la courbe C-6, quel que soit l'allongement considéré).

### D) Essai 4

Cet essai démontre que l'agent de couplage citraconimido-alkoxysilane, particulièrement performant lorsqu'il est combiné à un élastomère isoprénique, se révèle par contre inefficace en l'absence d'un tel élastomère, en particulier lorsque l'élastomère diénique utilisé consiste entièrement en un élastomère synthétique tel que SBR conventionnellement utilisé par exemple dans les bandes de roulement de pneumatiques tourisme.

On prépare pour cet essai trois compositions à base d'élastomère NR et/ou SBR, renforcées de silice et utilisant toutes trois le citraconimido-alkoxysilane à titre d'agent de couplage. Ces compositions se distinguent avant tout par la quantité de caoutchouc naturel utilisée:
- composition C-8 : 100 pce de NR;
- composition C-9 : 50 pce de NR mélangé avec 50 pce de SBR;
- composition C-10 : 100 pce de SBR.

Seules les compositions C-8 et C-9 sont donc conformes à l'invention, la composition témoin C-10 ne contenant pas d'élastomère isoprénique.

Les tableaux 7 et 8 donnent la formulation des compositions et leurs propriétés avant et après cuisson. La quantité de silice a été augmentée dans les compositions C-9 et C-10 pour tenir compte de la présence de l'élastomère diénique SBR nécessitant, de manière connue, un taux plus élevé de charge inorganique renforçante qu'un élastomère isoprénique. L'agent de couplage citraconimido-alkoxysilane est utilisé à un taux sensiblement constant (environ 9,5% en poids) par rapport à la quantité de silice.

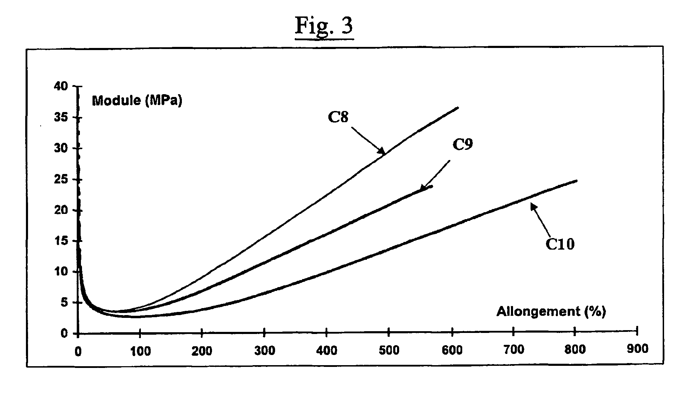

La figure 3 reproduit les courbes de module en fonction de l'allongement, ces courbes étant notées C8 à C10 et correspondant respectivement aux compositions C-8 à C-10.

L'étude des résultats du tableau 8 démontre que la composition témoin C-10 (SBR), comparée à la composition conforme à l'invention C-8 (NR), présente, outre une augmentation de plasticité (attendue en raison de la nature des élastomères testés), des propriétés après cuisson qui sont nettement dégradées, avec une forte diminution des valeurs de modules sous forte déformation, M100 et M300. La figure 3 ne fait que confirmer ce résultat, avec une courbe C10 située très en dessous de la courbe C8, quel que soit l'allongement considéré.

Tout ceci est un indicateur clair pour l'homme du métier d'un couplage insuffisant entre l'élastomère diénique SBR et la charge inorganique renforçante dans le cas de la composition C-10 (dépourvue d'élastomère isoprénique).

Quant à la composition C-9 conforme à l'invention, on note qu'elle présente des propriétés de renforcement intermédiaires, encore satisfaisantes (voir valeurs de module M100 et M300, proches de celles de la composition C-8) grâce à la présence d'une certaine quantité (50 pce) d'élastomère isoprénique.

### E) Essai 5

Ce dernier essai illustre un autre mode de réalisation préférentiel de l'invention, dans lequel on associe à l'agent de couplage citraconimido-alkoxysilane un agent de recouvrement de la charge inorganique renforçante.

En améliorant notamment la dispersion de la charge inorganique dans la matrice isoprénique, ce dernier est susceptible d'augmenter l'efficacité globale du couplage, permettant ainsi de réduire la quantité de citraconimido-alkoxysilane sans affecter les propriétés de couplage. Cet agent de recouvrement est de préférence un polyorganosiloxane hydroxylé, en particulier un α,ω-dihydroxy-polyorganosiloxane. Il est incorporé à la composition selon l'invention en même temps que le citraconimido-alkoxysilane (étape non-productive).

On compare pour cet essai deux compositions, identiques aux différences près qui suivent:
- composition C-11: agent de couplage TESPT (4 pce);
- composition C-12: citraconimido-alkoxysilane (3 pce) + agent de recouvrement (1 pce).

La composition C-11 est le témoin de l'essai, identique à la composition témoin C-1 de l'essai 1 précédent. La composition C-12 est la composition conforme à l'invention, identique à la composition C-2 de l'essai 1 précédent à la différence près, toutefois, que la quantité de citraconimido-alkoxysilane a été réduite de près de 40% (3 pce au lieu 4,7 pce) grâce à la présence de l'agent de recouvrement, cette quantité représentant ainsi, avantageusement, moins de 8% (précisément 6%) en poids par rapport à la quantité de charge inorganique renforçante.

Les tableaux 9 et 10 donnent la formulation des différentes compositions, leurs propriétés avant et après cuisson (150°C, 25 minutes).

L'étude des résultats du tableau 10 montre que, de manière inattendue, la composition C-12 selon l'invention présente toujours, malgré un taux fortement réduit d'agent de couplage, un compromis de propriétés globalement amélioré par rapport à la composition témoin C-11 utilisant le TESPT:
- plasticité Mooney identique (et basse) dans les deux cas;
- sécurité au grillage (T5) légèrement supérieure;
- après cuisson, des propriétés (contrainte et allongement) à la rupture équivalentes;
- même compromis en ce qui concerne les propriétés hystérétiques (tan(δ)ₘₐₓ et ΔG*);
- enfin, des modules à forte déformation (M100, M300) et un rapport M300/M100 légèrement plus élevés, synonymes d'un renforcement supérieur et donc d'un couplage meilleur entre l'élastomère et la charge inorganique renforçante.

En résumé, l'alkoxysilane sélectionné pour les compositions conformes à l'invention, à base d'élastomère isoprénique et de charge inorganique renforçante, confère à ces dernières des propriétés de renforcement élevées à l'état vulcanisé combinées à une faible hystérèse, tout en leur offrant de très bonnes propriétés de mise en oeuvre à l'état cru (viscosité réduite).

Cet alkoxysilane, grâce à sa fonction citraconimide spécifique, révèle non seulement une performance globale nettement supérieure à celle d'autres alkoxysilanes connus du type à double liaison éthylénique activée, mais démontre aussi, de manière inattendue, une efficacité supérieure à celle de l'alkoxysilane polysulfuré TESPT, agent de couplage de référence pour les compositions de caoutchouc renforcées d'une charge inorganique telle que la silice.

L'invention trouve des applications particulièrement avantageuses dans les compositions de caoutchouc utilisables pour la fabrication de bandes de roulement de pneumatiques présentant à la fois une faible résistance au roulement et une résistance élevée à l'usure, en particulier lorsque ces bandes de roulement sont exclusivement à base de polyisoprène et sont destinées à des pneumatiques pour véhicules industriels du type Poids-lourd.

**Tableau 1**

| Composition N°: | C-1 | C-2 | C-3 |
|---|---|---|---|
| NR (1) | 100 | 100 | 100 |
| silice (2) | 50 | 50 | 50 |
| silane (3) | 4 | - | - |
| silane (4) | - | 4.7 | - |
| silane (5) | - | - | 3.7 |
| ZnO | 3 | 3 | 3 |
| acide stéarique | 2.5 | 2.5 | 2.5 |
| antioxydant (6) | 1.9 | 1.9 | 1.9 |
| soufre | 1.5 | 1.5 | 1.5 |
| accélérateur (7) | 1.8 | 1.8 | 1.8 |

| | | | |
|---|---|---|---|
| (1) caoutchouc naturel; (2) silice type "HD" - "Zeosil 1165MP" de la société Rhodia sous forme de microperles (BET et CTAB : environ 150-160 m²/g); (3) TESPT ("Si69" de la société Degussa); (4) citraconimido-alkoxysilane : N-(propyltriéthoxysilyl)citraconimide; (3) méthacrylate de triméthoxysilylpropyle ("Dynasylan Memo" de la société Hüls); (6) N-1,3-diméthylbutyl-N-phényl-para-phénylènediamine ("Santoflex 6-PPD" de la société Flexsys); (7) N-cyclohexyl-2-benzothiazyl-sulfénamide ("Santocure CBS" de la société Flexsys). | | | |

**Tableau 2**

| Composition N°: | C-1 | C-2 | C-3 |
|---|---|---|---|
| *Propriétés avant cuisson:* | | | |
| Mooney (UM) | 29 | 30 | 29 |
| T5 (min) | 22 | 30 | 30 |

| *Propriétés après cuisson:* | | | |
|---|---|---|---|
| M10 (MPa) | 4.4 | 4.3 | 3.4 |
| M100 (MPa) | 1.7 | 1.6 | 1.2 |
| M300 (MPa) | 1.8 | 2.0 | 1.4 |
| M300/M100 | 1.06 | 1.25 | 1.17 |
| contrainte rupture (MPa) | 29 | 29 | 30 |
| allongement rupture (%) | 605 | 580 | 673 |
| tan(δ)ₘₐₓ | 0.18 | 0.19 | 0.19 |
| ΔG* | 2.1 | 1.8 | 1.6 |

**Tableau 3**

| Composition N°: | C-4 | C-5 |
|---|---|---|
| NR(1) | 100 | 100 |
| silice (2) | 50 | 50 |
| silane (4) | 4.7 | - |
| silane (8) | - | 4.5 |
| ZnO | 3 | 3 |
| acide stéarique | 2.5 | 2.5 |
| anti-oxydant (6) | 1.9 | 1.9 |
| soufre | 1.5 | 1.5 |
| accélérateur (7) | 1.8 | 1.8 |

| | | |
|---|---|---|
| (1) à (7) idem tableau 1; (8) maléimido-alkoxysilane : N-(propyltriéthoxysilyl)maléimide. | | |

**Tableau 4**

| Composition N°: | C-4 | C-5 |
|---|---|---|
| *Propriétés avant cuisson:* | | |
| Mooney (UM) | 30 | 72 |
| T5(min) | 30 | 30 |

| *Propriétés après cuisson:* | | |
|---|---|---|
| M10 (MPa) | 4.3 | 3.6 |
| M100 (MPa) | 1.6 | 1.7 |
| M300 (MPa) | 2.0 | 2.2 |
| M300/M100 | 1.25 | 1.29 |
| contrainte rupture (MPa) | 29 | 29 |
| allongement rupture (%) | 580 | 465 |

**Tableau 5**

| Composition N°: | C-6 | C-7 |
|---|---|---|
| NR (1) | 100 | 100 |
| alumine (9) | 80 | 80 |
| silane (3) | 4 | - |
| silane (4) | - | 4.7 |
| ZnO | 3 | 3 |
| acide stéarique | 2.5 | 2.5 |
| anti-oxydant (6) | 1.9 | 1.9 |
| soufre | 1.5 | 1.5 |
| accélérateur (7) | 1.8 | 1.8 |

| | | |
|---|---|---|
| (1) à (7) idem tableau 1; (9) alumine "Baikalox CR125" de la société Baikowski, sous forme de poudre (BET : environ 105 m²/g). | | |

**Tableau 6**

| Composition N°: | C-6 | C-7 |
|---|---|---|
| *Propriétés avant cuisson:* | | |
| Mooney (UM) | 43 | 43 |
| T5(min) | 12 | 12 |

| *Propriétés après cuisson:* | | |
|---|---|---|
| M10 (MPa) | 4.0 | 5.0 |
| M100 (MPa) | 1.3 | 1.5 |
| M300 (MPa) | 1.2 | 1.6 |
| M300/M100 | 0.92 | 1.07 |
| contrainte rupture (MPa) | 27 | 31 |
| allongement rupture (%) | 639 | 650 |

**Tableau 7**

| Composition N°: | C-8 | C-9 | C-10 |
|---|---|---|---|
| NR (1) | 100 | 50 | - |
| SBR (10) | - | 50 | 100 |
| silice (2) | 50 | 65 | 80 |
| silane (4) | 4.7 | 6.2 | 7.6 |
| ZnO | 3 | 3 | 3 |
| huile aromatique (11) | - | 18.75 | 37.5 |
| DPG (12) | 1.5 | 1.5 | 1.5 |
| acide stéarique | 2.5 | 2.5 | 2.5 |
| anti-oxydant (6) | 1.9 | 1.9 | 1.9 |
| soufre | 1.3 | 1.3 | 1.3 |
| accélérateur(7) | 1.9 | 1.9 | 1.9 |

| | | | |
|---|---|---|---|
| (1) à (7) idem tableau 1; (10) SBR solution avec 77% de motifs butadiène (58% de 1-2 ; 23% de trans) ; 23% de motifs styrène ; étendu avec 37,5% en poids d'huile (soit 37,5 pce d'huile pour 100 pce de SBR sec) ; exprimé en SBR sec ; Tg = -29°C; (11) huile d'extension aromatique du SBR; (12) diphénylguanidine ("Vulcacit D" de la société BAYER). | | | |

**Tableau 8**

| Composition N°: | C-8 | C-9 | C-10 |
|---|---|---|---|
| *Propriétés avant cuisson:* | | | |
| Mooney (UM) | 30 | 56 | 57 |
| T5 (min) | 30 | 30 | 26 |

| *Propriétés après cuisson:* | | | |
|---|---|---|---|
| M10 (MPa) | 4.3 | 6.0 | 5.9 |
| M100 (MPa) | 1.6 | 1.6 | 1.1 |
| M300 (MPa) | 2.0 | 1.8 | 1.1 |
| M300/M100 | 1.25 | 1.13 | 1.0 |
| contrainte rupture (MPa) | 29 | 20 | 22 |
| allongement rupture (%) | 580 | 570 | 804 |

**Tableau 9**

| Composition N°: | C-11 | C-12 |
|---|---|---|
| NR (1) | 100 | 100 |
| silice (2) | 50 | 50 |
| silane (3) | 4 | - |
| silane (4) | - | 3 |
| PDMS (13) | - | 1 |
| ZnO | 3 | 3 |
| acide stéarique | 2.5 | 2.5 |
| anti-oxydant (6) | 1.9 | 1.9 |
| soufre | 1.5 | 1.5 |
| accélérateur (7) | 1.8 | 1.8 |

| | | |
|---|---|---|
| (1) à (7) idem tableau 1; (13) α,ω-dihydroxy-polyméthylsiloxane (huile "Rhodorsil 48V50" de la société Rhodia). | | |

**Tableau 10**

| Composition N°: | C-11 | C-12 |
|---|---|---|
| *Propriétés avant cuisson:* | | |
| Mooney (UM) | 29 | 30 |
| T5 (min) | 22 | 30 |

| *Propriétés après cuisson:* | | |
|---|---|---|
| M10 (MPa) | 4.4 | 4.8 |
| M100 (MPa) | 1.7 | 1.8 |
| M300 (MPa) | 1.8 | 2.1 |
| M300/M100 | 1.06 | 1.17 |
| contrainte rupture (MPa) | 29 | 28 |
| allongement rupture (%) | 605 | 570 |
| tan(δ)ₘₐₓ | 0.18 | 0.18 |
| ΔG* | 2.1 | 2.0 |

## Revendications

1. Composition de caoutchouc à base d'au moins un élastomère isoprénique, une charge inorganique à titre de charge renforçante, un agent de couplage (charge inorganique/élastomère isoprénique), **caractérisée en ce que** cet agent de couplage est un citraconimido-alkoxysilane répondant à la formule (Me = méthyle): 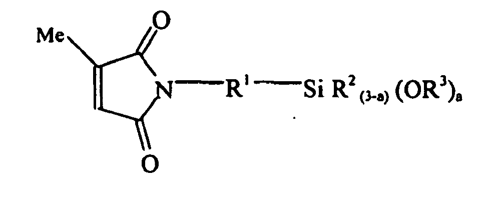 dans laquelle "a" est égal à 1, 2 ou 3 ; R¹ est un groupe divalent destiné à assurer la liaison avec l'atome de silicium ; R² et R³ sont des groupes hydrocarbonés monovalents.

2. Composition selon la revendication 1, l'élastomère isoprénique étant choisi dans le groupe constitué par le caoutchouc naturel, les polyisoprènes cis-1,4 de synthèse et les mélanges de ces élastomères.

3. Composition selon les revendications 1 ou 2, le taux de charge inorganique renforçante étant compris entre 10 et 200 pce (parties en poids pour cent d'élastomère ou caoutchouc).

4. Composition selon l'une quelconque des revendications 1 à 3, la quantité de citraconimido-alkoxysilane étant supérieure à 0,5 pci (parties en poids pour cent d'élastomère isoprénique).

5. Composition selon la revendication 4, la quantité de citraconimido-alkoxysilane étant comprise entre 1 et 15 pci.

6. Composition selon l'une quelconque des revendications 1 à 5, le citraconimido-alkoxysilane étant choisi parmi les N-[(alkyl(C₁-C₃)-alkoxy(C₁-C₃)silyl)]citraconimides.

7. Composition selon la revendication 6, le citraconimido-alkoxysilane étant choisi parmi les N-[propyl-alkoxy(C₁-C₃)silyl)]citraconimides.

8. Composition selon l'une quelconque des revendications 1 à 7, la quantité de citraconimido-alkoxysilane représentant entre 0,5% et 20% en poids par rapport à la quantité de charge inorganique renforçante.

9. Composition selon la revendication 8, la quantité de citraconimido-alkoxysilane représentant moins de 10% en poids par rapport à la quantité de charge inorganique renforçante.

10. Composition selon l'une quelconque des revendications 1 à 9, la charge inorganique renforçante étant majoritairement de la silice.

11. Composition selon l'une quelconque des revendications 1 à 9, la charge inorganique renforçante étant majoritairement de l'alumine.

12. Composition selon l'une quelconque des revendications 1 à 11, la charge inorganique renforçante formant la totalité de la charge renforçante.

13. Composition selon l'une quelconque des revendications 1 à 11, comportant en outre du noir de carbone.

14. Composition selon la revendication 13, le noir de carbone étant présent à un taux compris dans un domaine de 5 à 15 pce.

15. Composition selon l'une quelconque des revendications 2 à 14, l'élastomère isoprénique étant du caoutchouc naturel.

16. Composition selon l'une quelconque des revendications 7 à 15, le citraconimido-alkôxysilane étant un N-(propyléthoxysilyl)citraconimide.

17. Composition selon la revendication 16, le citraconimido-alkoxysilane étant le N-(propyltriéthoxysilyl)citraconimide.

18. Composition selon l'une quelconque des revendications 1 à 17, comportant en outre un agent de recouvrement de la charge inorganique.

19. Composition selon la revendication 18, l'agent de recouvrement étant un polyorganosiloxane hydroxylé.

20. Composition selon la revendication 19, l'agent de recouvrement étant un α,ω-dihydroxy-polyorganosiloxane.

21. Composition selon l'une quelconque des revendications 5 à 20, la quantité de citraconimido-alkoxysilane étant inférieure à 5 pci.

22. Composition selon l'une quelconque des revendications 1 à 21, **caractérisée en ce qu'**elle se trouve à l'état vulcanisé.

23. Procédé pour préparer une composition élastomérique, **caractérisé en ce qu'**on incorpore à au moins un élastomère isoprénique, au moins une charge inorganique à titre de charge renforçante et à titre d'agent de couplage (charge inorganique/élastomère isoprénique), un citraconimido-alkoxysilane répondant à la formule (Me = méthyle): 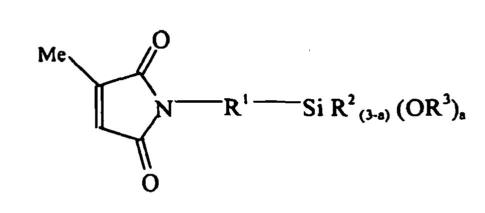 dans laquelle "a" est égal à 1, 2 ou 3 ; R¹ est un groupe divalent destiné à assurer la liaison avec l'atome de silicium ; R² et R³ sont des groupes hydrocarbonés monovalents,
et **en ce qu'**on malaxe thermomécaniquement le tout, en une ou plusieurs étapes, jusqu'à atteindre une température maximale comprise entre 110°C et 190°C.

24. Procédé selon la revendication 23, la température maximale de malaxage étant comprise entre 130°C et 180°C.

25. Procédé selon l'une quelconque des revendications 23 ou 24, le citraconimido-alkoxysilane étant choisi parmi les N-[(alkyl(C₁-C₃)-alkoxy(C₁-C₃)silyl)]citraconimides.

26. Procédé selon la revendication 25, le citraconimido-alkoxysilane étant choisi parmi les N-[propyl-alkoxy(C₁-C₃)silyl)]citraconimides.

27. Procédé selon la revendication 26, le citraconimido-alkoxysilane étant un N-(propyléthoxysilyl)citraconimide.

28. Procédé selon la revendication 27, le citraconimido-alkoxysilane étant le N-(propyltriéthoxysilyl)citraconimide.

29. Pneumatique comportant une composition de caoutchouc conforme à l'une quelconque des revendications 1 à 22.

30. Produit semi-fini pour pneumatique comportant une composition de caoutchouc conforme à l'une quelconque des revendications 1 à 22, ce produit semi-fini étant choisi en particulier dans le groupe constitué par les bandes de roulement, les sous-couches de ces bandes de roulement, les nappes sommet, les flancs, les nappes carcasse, les talons, les protecteurs, les chambres à air et les gommes intérieures étanches pour pneu sans chambre.

31. Produit semi-fini selon la revendication 30, consistant en une bande de roulement de pneumatique.

32. Pneumatique comportant un produit semi-fini conforme à l'une quelconque des revendications 30 ou 31.

33. Pneumatique Poids lourd comportant une bande de roulement selon la revendication 31.

34. Utilisation, à titre d'agent de couplage (charge inorganique/élastomère isoprénique) dans une composition de caoutchouc à base d'élastomère isoprénique renforcée par une charge inorganique, d'un citraconimido-alkoxysilane répondant à la formule (Me = méthyle): 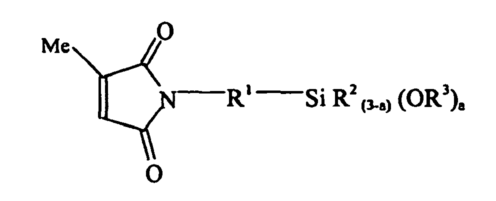 dans laquelle "a" est égal à 1, 2 ou 3 ; R¹ est un groupe divalent destiné à assurer la liaison avec l'atome de silicium ; R² et R³ sont des groupes hydrocarbonés monovalents.

35. Utilisation selon la revendication 34, le citraconimido-alkoxysilane étant choisi parmi les N-[(alkyl(C₁-C₃)-alkoxy(C₁-C₃)silyl)]citraconimides.

36. Utilisation selon la revendication 35, le citraconimido-alkoxysilane étant choisi parmi les N-[propyl-alkoxy(C₁-C₃)silyl)]citraconimides.

37. Utilisation selon la revendication 36, le citraconimido-alkoxysilane étant un N-(propyléthoxysilyl)citraconimide.

38. Utilisation selon la revendication 37, le citraconimido-alkoxysilane étant le N-(propyltriéthoxysilyl)citraconimide.

## Claims

1. A rubber composition based on at least an isoprene elastomer, an inorganic filler as reinforcing filler and an (inorganic filler/isoprene elastomer) coupling agent, **characterised in that** this coupling agent is a citraconimido-alkoxysilane of the formula (Me = methyl): 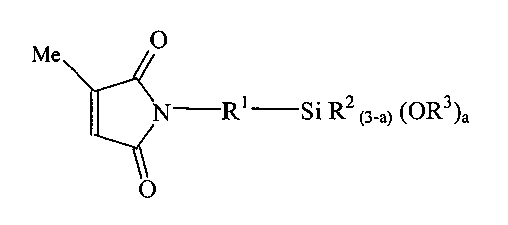 in which "a" is equal to 1, 2 or 3, R¹ is a divalent group intended to provide the bond with the silicon atom, R² and R³ are monovalent hydrocarbon groups.

2. A composition according to Claim 1, the isoprene elastomer being selected from the group consisting of natural rubber, synthetic cis-1,4 polyisoprenes and mixtures of these elastomers.

3. A composition according to Claims 1 or 2, the amount of reinforcing inorganic filler being between 10 and 200 phr (parts by weight to one hundred parts of elastomer or rubber).

4. A composition according to any one of Claims 1 to 3, the quantity of citraconimido-alkoxysilane being greater than 0.5 phi (parts by weight per hundred parts of isoprene elastomer).

5. A composition according to Claim 4, the quantity of citraconimido-alkoxysilane being between 1 and 15 phi.

6. A composition according to any one of Claims 1 to 5, the citraconimido-alkoxysilane being selected from among N-[((C₁-C₃)alkyl-(C₁-C₃)alkoxysilyl)]citraconimides.

7. A composition according to Claim 6, the citraconimido-alkoxysilane being selected from among N-[(propyl-(C₁-C₃)alkoxysilyl)]citraconimides.

8. A composition according to any one of Claims 1 to 7, the quantity of citraconimido-alkoxysilane representing between 0.5% and 20% by weight relative to the quantity of reinforcing inorganic filler.

9. A composition according to Claim 8, the quantity of citraconimido-alkoxysilane representing less than 10% by weight relative to the quantity of reinforcing inorganic filler.

10. A composition according to any one of Claims 1 to 9, the reinforcing inorganic filler being majoritarily silica.

11. A composition according to any one of Claims 1 to 9, the reinforcing inorganic filler being majoritarily alumina.

12. A composition according to any one of Claims 1 to 11, the reinforcing inorganic filler forming the entire reinforcing filler.

13. A composition according to any one of Claims 1 to 11, furthermore comprising carbon black.

14. A composition according to Claim 13, the carbon black being present in an amount lying within a range from 5 to 15 phr.

15. A composition according to any one of Claims 2 to 14, the isoprene elastomer being natural rubber.

16. A composition according to any one of Claims 7 to 15, the citraconimido-alkoxysilane being an N-(propylethoxysilyl)citraconimide.

17. A composition according to Claim 16, the citraconimido-alkoxysilane being N-(propyltriethoxysilyl)citraconimide.

18. A composition according to any one of Claims 1 to 17, furthermore comprising a covering agent for the inorganic filler.

19. A composition according to Claim 18, the covering agent being a hydroxylated polyorganosiloxane.

20. A composition according to Claim 19, the covering agent being an α,ω-dihydroxy-polyorganosiloxane.

21. A composition according to any one of Claims 5 to 20, the quantity of citraconimido-alkoxysilane being less than 5 phi.

22. A composition according to any one of Claims 1 to 21, **characterised in that** it is in the vulcanised state.

23. A process for preparing an elastomeric composition, **characterised in that** there are incorporated in at least an isoprene elastomer at least an inorganic filler as reinforcing filler and as (inorganic filler/isoprene elastomer) coupling agent a citraconimido-alkoxysilane of the formula (Me = methyl): 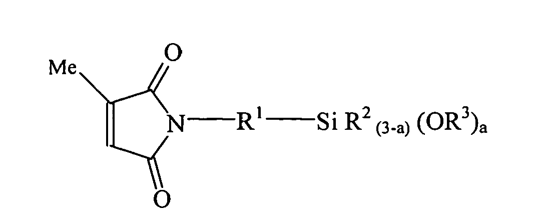 in which "a" is equal to 1, 2 or 3, R¹ is a divalent group intended to provide the bond with the silicon atom, R² and R³ are monovalent hydrocarbon groups,
and **in that** the entire mixture is kneaded thermomechanically, in one or more stages, until a maximum temperature of between 110°C and 190°C is reached.

24. A process according to Claim 23, the maximum kneading temperature being between 130°C and 180°C.

25. A process according to any one of Claims 23 or 24, the citaconimido-alkoxysilane being selected from among N-[((C₁-C₃)alkyl-(C₁-C₃)alkoxysilyl)]citraconimides.

26. A process according to Claim 25, the citraconimido-alkoxysilane being selected from among N-[(propyl-(C₁-C₃)alkoxysilyl)]citraconimides.

27. A process according to Claim 26, the citraconimido-alkoxysilane being an N-(propylethoxysilyl)citraconimide.

28. A process according to Claim 27, the citraconimido-alkoxysilane being N-(propyltriethoxysilyl)citraconimide.

29. A tyre comprising a rubber composition according to any one of Claims 1 to 22.

30. A semi-finished product for tyres, comprising a rubber composition according to any one of Claims 1 to 22, this semi-finished product being selected in particular from the group comprising treads, underlayers for these treads, crown plies, sidewalls, carcass plies, beads, protectors, inner tubes and airtight internal rubbers for tubeless tyres.

31. A semi-finished product according to Claim 30, consisting of a tyre tread.

32. A tyre comprising a semi-finished product according to any one of Claims 30 or 31.

33. A heavy-vehicle tyre comprising a tread according to Claim 31.

34. The use as (inorganic filler/isoprene elastomer) coupling agent in a rubber composition based on isoprene elastomer reinforced by an inorganic filler of a citraconimido-alkoxysilane of the formula (Me = methyl): 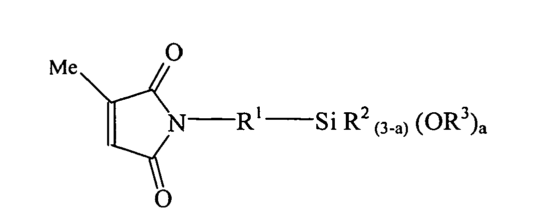 in which "a" is equal to 1, 2 or 3, R¹ is a divalent group intended to provide the bond with the silicon atom, R² and R³ are monovalent hydrocarbon groups.

35. The use according to Claim 34, the citraconimido-alkoxysilane being selected from among N-[((C₁-C₃)alkyl-(C₁ -C₃)alkoxysilyl)]citraconimides.

36. The use according to Claim 35, the citraconimido-alkoxysilane being selected from among N-[(propyl-(C₁-C₃)alkoxysilyl)]citraconimides.

37. The use according to Claim 36, the citraconimido-alkoxysilane being an N-(propylethoxysilyl)]citraconimide.

38. The use according to Claim 37, the citraconimido-alkoxysilane being N-(propyltriethoxysilyl)]citraconimide.

## Patentansprüche

1. Kautschukmischung auf der Basis mindestens eines Isoprenelastomers, eines anorganischen Füllstoffs als verstärkenden Füllstoff und eines Kupplungsmittels (anorganischer Füllstoff/Isoprenelastomer), **dadurch gekennzeichnet, dass** das Kupplungsmittel ein Citraconimido-alkoxysilan der folgenden Formel ist (Me = Methyl): 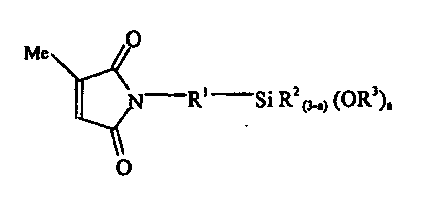 worin "a" 1, 2 oder 3 bedeutet, R¹ eine zweiwertige Gruppe bedeutet, die die Bindung an das Siliciumatom sicherstellen soll, und R² und R³ einwertige Kohlenwasserstoffgruppen sind.

2. Mischung nach Anspruch 1, wobei das Isoprenelastomer unter Naturkautschuk, synthetischen cis-1,4-Polyisoprenen und den Gemischen dieser Elastomere ausgewählt ist.

3. Mischung nach den Ansprüchen 1 oder 2, wobei der Mengenanteil des verstärkenden anorganischen Füllstoffs im Bereich von 10 bis 200 pce (Gewichtsteile auf einhundert Teile Elastomer oder Kautschuk) liegt.

4. Mischung nach einem der Ansprüche 1 bis 3, wobei der Mengenanteil des Citraconimido-alkoxysilans über 0,5 pci (Gewichtsteile auf einhundert Teile Isoprenelastomer) liegt.

5. Mischung nach Anspruch 4, wobei der Mengenanteil des Citraconimido-alkoxysilans im Bereich von 1 bis 15 pci liegt.

6. Mischung nach einem der Ansprüche 1 bis 5, wobei das Citraconimidoalkoxysilan unter den N-[(Alkyl(C₁₋₃)-alkoxy(C₁₋₃)-silyl)]-citraconimiden ausgewählt ist.

7. Mischung nach Anspruch 6, wobei das Citraconimido-alkoxy-silan unter den N-[Propyl-alkoxy(C₁₋₃)-silyl)]-citraconimiden ausgewählt ist.

8. Mischung nach einem der Ansprüche 1 bis 7, wobei der Mengenanteil des Citraconimido-alkoxysilans 0,5 bis 20 Gew.-%, bezogen auf die Menge des anorganischen verstärkenden Füllstoffs, ausmacht.

9. Mischung nach Anspruch 8, wobei der Mengenanteil des Citraconimido-alkoxysilans weniger als 10 Gew.-%, bezogen auf die Menge des anorganischen verstärkenden Füllstoffs, ausmacht.

10. Mischung nach einem der Ansprüche 1 bis 9, wobei der anorganische verstärkende Füllstoff in einem überwiegenden Anteil aus Kieselsäure besteht.

11. Mischung nach einem der Ansprüche 1 bis 9, wobei der anorganische verstärkende Füllstoff in einem überwiegenden Anteil aus Aluminiumoxid besteht.

12. Mischung nach einem der Ansprüche 1 bis 11, wobei der anorganische verstärkende Füllstoff den gesamten verstärkenden Füllstoff bildet.

13. Mischung nach einem der Ansprüche 1 bis 11, die ferner Ruß enthält.

14. Mischung nach Anspruch 13, wobei der Ruß in einer Menge von 5 bis 15 pce enthalten ist.

15. Mischung nach einem der Ansprüche 2 bis 14, wobei es sich bei dem Isoprenelastomer um Naturkautschuk handelt.

16. Mischung nach einem der Ansprüche 7 bis 15, wobei das Citraconimido-alkoxy-silan ein N-(Propylethoxysilyl)-citraconimid ist.

17. Mischung nach Anspruch 16, wobei das Citraconimido-alkoxy-silan das N-(Propyltriethoxysilyl)-citraconimid ist.

18. Mischung nach einem der Ansprüche 1 bis 17, die ferner ein Bedeckungsmittel für den anorganischen Füllstoff enthält.

19. Mischung nach Anspruch 18, wobei das Bedeckungsmittel ein hydroxyliertes Polyorganosiloxan ist.

20. Mischung nach Anspruch 19, wobei das Bedeckungsmittel ein α,ω-Dihydroxy-polyorganosiloxan ist.

21. Mischung nach einem der Ansprüche 5 bis 20, wobei der Mengenanteil des Citraconimido-alkoxysilans unter 5 pce liegt.

22. Mischung nach einem der Ansprüche 1 bis 21, **dadurch gekennzeichnet, dass** sie im vulkanisierten Zustand vorliegt.

23. Verfahren zur Herstellung einer Elastomermischung, **dadurch gekennzeichnet, dass** mindestens ein Isoprenelastomer, mindestens ein anorganischer Füllstoff als verstärkender Füllstoff und als Kupplungsmittel (anorganischer Füllstoff/Isoprenelastomer) ein Citraconimido-alkoxysilan der folgenden Formel (Me = Methyl) eingebracht wird: 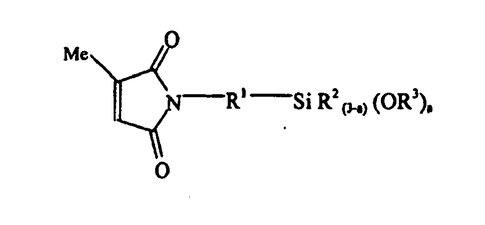 worin "a" 1, 2 oder 3 bedeutet, R¹ eine zweiwertige Gruppe bedeutet, die die Bindung an das Siliciumatom sicherstellen soll, und R² und R³ einwertige Kohlenwasserstoffgruppen sind,
und **dadurch**, dass das Ganze in einem oder mehreren Schritten bis zum Erreichen einer Maximaltemperatur von 110 bis 190 °C thermomechanisch geknetet wird.

24. Verfahren nach Anspruch 23, wobei die Maximaltemperatur beim Kneten im Bereich von 130 bis 180 °C liegt.

25. Verfahren nach einem der Ansprüche 23 oder 24, wobei das Citraconimidoalkoxysilan unter den N-[(Alkyl(C₁₋₃)-alkoxy(C₁₋₃)-silyl)]-citraconimiden ausgewählt ist.

26. Verfahren nach Anspruch 25, wobei das Citraconimido-alkoxysilan unter den N-[Propyl-alkoxy(C₁₋₃)-silyl]-citraconimiden ausgewählt ist.

27. Verfahren nach Anspruch 26, wobei das Citraconimido-alkoxysilan ein N-(Propylethoxysilyl)-citraconimid ist.

28. Verfahren nach Anspruch 27, wobei das Citraconimido-alkoxysilan das N-(Propyltriethoxysilyl)-citraconimid ist.

29. Luftreifen, der eine Kautschukmischung nach einem der Ansprüche 1 bis 22 enthält.

30. Halbfertigprodukt für Luftreifen, das eine Kautschukmischung nach einem der Ansprüche 1 bis 22 enthält, wobei dieses Halbfertigprodukt insbesondere unter den Laufstreifen, Unterplatten, die unter den Laufstreifen angebracht werden sollen, Scheitellagen, Seitenprofilen, Karkassenlagen, Reifenwülsten, Protektoren, Luftkammern und dichten Innengummis für schlauchlose Reifen ausgewählt ist.

31. Halbfertigprodukt nach Anspruch 30, bei dem es sich um einen Laufstreifen für Luftreifen handelt.

32. Luftreifen, der ein Halbfertigprodukt nach einem der Ansprüche 30 oder 31 enthält.

33. Lastkraftwagenreifen, der einen Laufstreifen nach Anspruch 31 enthält.

34. Verwendung eines Citraconimido-alkoxysilans der folgenden Formel (Me = Methyl) als Kupplungsmittel (anorganischer Füllstoff/Isoprenelastomer) in einer Elastomermischung auf der Basis eines Isoprenelastomers, das mit einem anorganischen Füllstoff verstärkt ist: 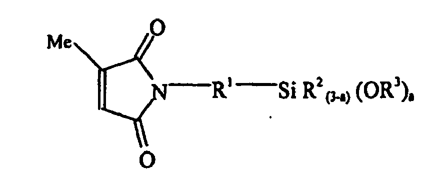 worin "a" 1, 2 oder 3 bedeutet, R¹ eine zweiwertige Gruppe bedeutet, die die Bindung an das Siliciumatom sicherstellen soll, und R² und R³ einwertige Kohlenwasserstoffgruppen sind

35. Verwendung nach Anspruch 34, wobei das Citraconimidoalkoxysilan unter den N-[(Alkyl(C₁₋₃)-alkoxy(C₁₋₃)silyl)]-citraconimiden ausgewählt ist.

36. Verwendung nach Anspruch 35, wobei das Citraconimidoalkoxysilan unter den N-[Propyl-alkoxy(C₁₋₃)silyl]-citraconimiden ausgewählt ist.

37. Verwendung nach Anspruch 36, wobei das Citraconimido-alkoxysilan ein N-(Propylethoxysilyl)-citraconimid ist.

38. Verwendung nach Anspruch 37, wobei das Citraconimido-alkoxy-silan das N-(Propyltriethoxysilyl)-citraconimid ist.
